# EUROPEAN PATENT SPECIFICATION

(11) **EP 2 016 004 B1**
(45) Date of publication and mention of the grant of the patent: **18.08.2010**
(21) Application number: 06756271.0
(22) Date of filing: 24.04.2006
(51) Int. Cl.: B65D 51/16, B65D 43/02

(54) **PROTECTING MEMBRANE FOR A VESSEL ADAPTED FOR COOKING, FREEZING OR STORING FOODSTUFF**
SCHUTZMEMBRAN FÜR EIN ZUM KOCHEN, GEFRIEREN ODER LAGERN VON LEBENSMITTELN AUSGEFÜHRTES GEFÄSS
MEMBRANE DE PROTECTION DESTINÉE À UN RÉCIPIENT CONÇU POUR CUISINER, CONGELER OU STOCKER DES ALIMENTS

(43) Date of publication of application: 21.01.2009
(73) Proprietor: Tosini, Giorgio, 24060 Credaro (BG) (IT)
(72) Inventor: Tosini, Giorgio, 24060 Credaro (BG) (IT)
(74) Representative: Garavelli, Paolo
(86) International application number: PCT/IT2006/000277
(87) International publication number: WO 2007/122648

(56) References cited:
- EP-A1- 1 332 982
- WO-A-00/45688
- WO-A-98/08748
- DE-A1- 4 315 701
- US-A- 5 944 211

## Description

The present invention deals with a protecting membrane for a vessel adapted for cooking, freezing or storing foodstuff.

The prior art deals with: vessels adapted for cooking and covers equipped with elastic parts, which allow adapting the cover to the vessel sizes in addition to the airtight seal with respect to external agents, air and humidity. Non-metallic covers are known, in particular completely made of silicone with high elasticity and deformability to be adapted to the vessel sizes and for guaranteeing the airtight seal as regards external agents such as air and humidity.

In the category of partially or completely elastic covers, which can be adapted to the vessel sizes, with airtight seal with respect to the outside, made of elastic material, there are protecting membranes for a vessel adapted for cooking, freezing and storing foodstuff.

A protecting membrane belonging to this category can be made of silicone, transparent silicone, both adapted to operate in a temperature range included between -50°C and 300°C, whose thickness is about two millimeters, equipped with reinforcing ribs or rings, in addition to gaskets placed next to the sealing area with respect to the vessel to which it must be adapted by elastically adhering thereto. Suitable members projecting from the protecting membrane edges, wings, grips, provide the operator with an easy grip for suitably expanding the elastic membrane, adapting it to the inlet sizes of the vessel containing the foodstuff to be covered and protected.

A protecting membrane has an unidirectional valve, manually operating through an operator's intervention who, when he deems it adequate, lifts the elastic edge of the covering membrane reinstating the balance between internal pressure and outside environment; or an unidirectional valve which automatically operates by means of the pressurised gas, which squashes, moving them, the elastic members which obstruct the valve, communicating the inside over-pressurised environment with the outside; or an unidirectional valve equipped with a suitable exhaust channel for internal gas, such channel being made of a transverse member with respect to the sealing rings and which is able to locally stop the adherence between membrane and vessel.

WO-A-98/08748 discloses a protecting membrane according to the preamble of claim 1.

A protecting membrane for a vessel adapted for cooking, freezing or storing foodstuff, as claimed in claim 1, in addition to the above described functions already common in the prior art, solves a double problem: on one hand a protecting membrane for a vessel adapted for cooking, freezing or storing foodstuff has been equipped with an unidirectional valve which can be easily separated from the protecting membrane, and therefore can be easily replaced with different types of unidirectional valves, allowing to separately wash the membrane and the valve, thereby avoiding to having to take care of cleaning the duct from which gas and steam go out, such duct being easily clogged by slags of fats and other food substances; on the other hand, a protecting membrane has been devised having an elastic deforming capability according to a well-defined effort direction in order to increase the distortion of particular areas of the membrane with respect to the membrane portion in which the unidirectional valve is placed, thereby avoiding to detach the unidirectional valve from its own seat during the stretching and inserting step of the vessel inlet.

The invention will be described in detail with reference to the enclosed figures:

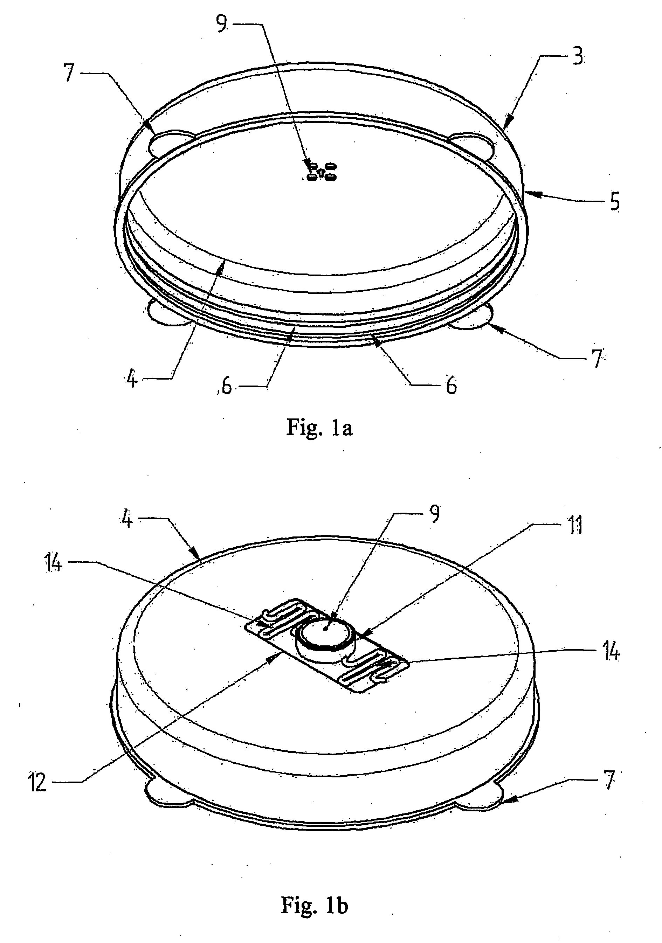

- figure 1a: axonometric bottom view of a membrane cover of the invention, equipped with an unidirectional valve and of a portion of corrugated surface along the directrix of two facing wings;
- figure 1b: axonometric top view of the membrane cover of figure 1a;

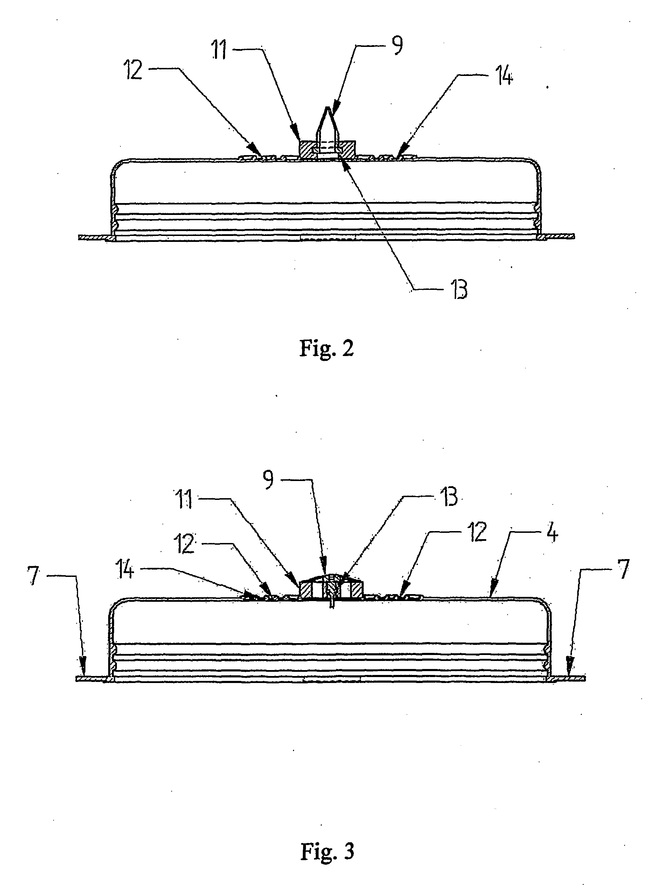

- figure 2: cross sectional view of a membrane cover of the invention, equipped with an unidirectional valve of the type with double elastic laminas;
- figure 3: cross sectional view of a membrane cover of the invention, equipped with an unidirectional valve of the type with elastic concave surface;

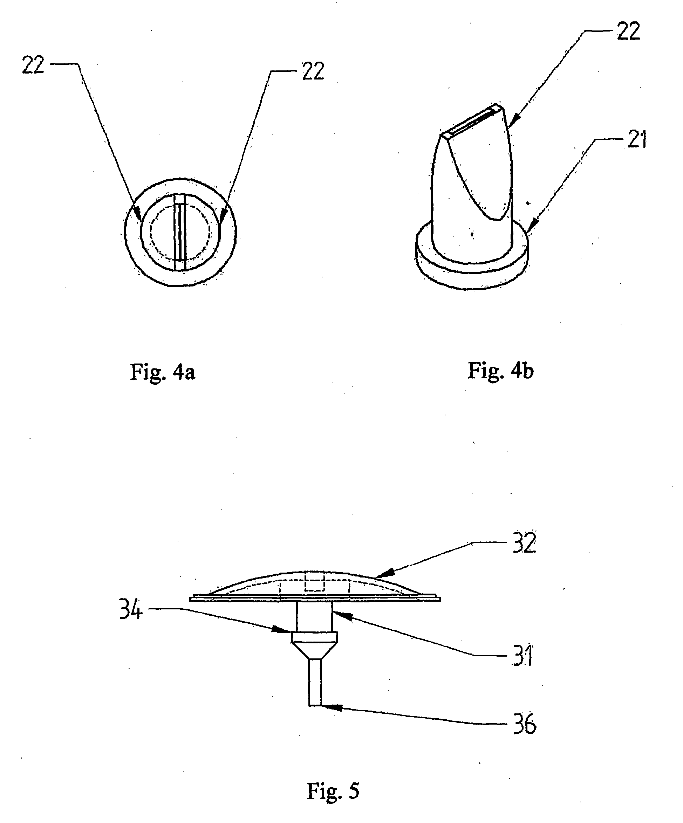

- figures 4a and 4b: two views of an unidirectional valve with double elastic laminas;
- figure 5: side view of an unidirectional valve with elastic concave surface.

An open vessel for foodstuff, not shown, made of rigid material, is delimited by a lip-type edge, not shown, coupled with a membrane cover 3 which covers it, comprising a plane base surface 4 having a geometric shape which is almost equal to the opening delimited from the lip and a side edge or surface 5 equipped with at least two projecting and facing grips 7 used by the operator in order to elastically deform the membrane making it adequate to the sizes of the lip-type edge of the vessel.

The membrane cover protects the food when cooking, which occurs by means of a microwave oven or another type of foodstuff heater; the cover is for such purpose made of an elastic deformable material, which is elastically adapted to the vessel opening sizes.

The same type of membrane cover deals with a foodstuff subject to freezing or storage, protecting it from alterations due to external agents such as air or humidity.

An unidirectional valve 9, integral with the membrane 3, expels steam, gas and everything else produced from the food subjected to cooking or freezing. The side edge or surface 5 of the protecting membrane 3 comprises annular projections 6, which adhere to the vessel lip, reducing the circling effects responsible for a thinning of the annular surface 5 of the membrane cover 3, such tcircling effects generating the membrane tearing.

When cooking, the particles of oily and fatty substances emitted by the food are dragged by pressurised gases and steam, partly going out to the outside, partly affecting and clogging the ducts of the unidirectional valve 9.

Washing of the protecting membrane 3 only partly removes the fatty substances which affect the ducts of the unidirectional valve 9; hereby, a need arises of providing the membrane 3 with an unidirectional valve 9 which can be easily separated from the membrane 3, allowing to replace it with new valves and allowing to wash the membrane, which is now equipped with a simple hole for housing the valve 9 adapted to be detached.

A protecting membrane 3 and an unidirectional valve 9, which can be mutually assembled, further allow using unidirectional valves which are made of a suitable material, not necessarily of the same type used for making the elastic membrane 3.

An elastic membrane 3 equipped with a housing seat for a valve made of rigid or semi-rigid material must provide for a check of the stiffening thickness next to the housing hole of the unidirectional valve 9. For this, the valve seat is a projection or protuberance 11, equipped with a shaped hole 13 inside which a suitable undercut blocks a pin or an abutment integral with the unidirectional valve 9.

This projection or protuberance 11, integral with the membrane cover 3, is with low deformability in order not to deform the shaped hole 13 which must keep the unidirectional valve 9. Due to this, the plane base surface 4 is equipped with portions of compensating area 12 with a thin thickness with respect to the remaining bassorilievo surface which composes the membrane 3. These hollow areas 12 connect the scarcely deformable projection 11 with the bassorilievo portion composing the plane 4 of the membrane 3 compensating, with the expansion of the area 12, the low deformability of the projection 11 during the step in which the operator expands the membrane by operating on the facing wings 7.

The portions of compensating area 12 are equipped with a rib 14 which creates a corrugated surface 12 - 14 whose stress direction is defined by the line joining the two facing wings 7. Purpose of the corrugated surface 12 - 14 is:
- adequately compensating, along such stress axis, the low distortion of the projection 11 containing the unidirectional valve 9;
- elastically separating, along such stress axis, the projection with low deformability 11 with respect to the bassorilievo surface 4 and the side surface 5 composing the membrane 3.

The membrane cover of the invention is equipped with: a projection for securing an unidirectional valve which can be easily separated in the washing and manufacturing operations; a corrugated compensating surface according to a stress axis located by two facing wings, which is preferably made of elastic deformable material known in the foodstuff field according to directives in force.

In particular, reference is made to thermoplastic, silicone, elastomeric material; in detail: platinum silicone, particularly adapted for freezing at -50°C and cooking at 300°C; peroxide silicone; elastomer adapted for cooking at 300°C and freezing at -50°C.

Among the types of unidirectional valves which can be assembled with the membrane cover, the following are mentioned; carburettor valves, known in the motor vehicle field, and valves for hydromassage apparatus, known in the sanitary field. In case of cooking, freezing or storing foodstuff, these valves are made of rigid or semi-rigid material. The operation of this type of valves can be different; in particular, a valve is described comprising a cylindrical base 21 from which two elastic laminas 22 project, which are separate and adhering one to the other forming a recess which operates as reed of a musical instrument. In fact, the gas emitted by the foodstuff when cooking presses onto the recess, opening it by expanding the two elastic laminas.

According to another type of unidirectional valve, a concave elastic member 32, projecting from a central axial-symmetric pin 31, is assembled in order to adhere its own plane circular edge to the abutment plane of the projection 11 obtained on the membrane cover 3. The gas emitted from the food when cooking presses onto the concave member deforming it and creating a vent in the contact area between the edge of the concave elastic member 32 and the plane of the projection 11 of the cover 3. The projection 11 with low deformability going out of the plane 4 of the membrane cover 3, comprises a shaped hole in which a receptacle is obtained in which the central shaft 31 houses, blocking the annular projection 34 of the unidirectional valve 9.

The central shaft 31 ends with a peduncle 36 which is projecting with respect to the internal plane of the membrane cover. This peduncle 36 facilitates the assembling operation being a grip for the operator who, when the assembling ends, cuts the exceeding part, removing it.

Among the different variations of the invention, the following embodiments are mentioned, which fall within the scope of the claims defined in the present specification:
- the creation of corrugated surfaces 12 - 14, as many as the pairs of facing wings 7;
- all unidirectional valves 9 which can be made of hard silicone and can be assembled to the projection 11 of the membrane 3 suitably equipped with a receptacle or abutment;
- the unidirectional valve is assembled to the cover according to one of the following valve insertion techniques:
   - molding in the step following the molding of the cover 3;
   - over-molding with respect to the cover 3;
   - molding in a monolithic piece with the cover 3.

## Claims

1. Protecting membrane (3) for a vessel adapted for cooking, freezing or storing foodstuff, said vessel being adapted for cooking or being equipped with non-metallic covers equipped with elastic parts, equipped with grips in order to expand the elastic membrane (3) making it adequate for the vessel inlet sizes, equipped with an unidirectional valve (9) for a connection to the outside, said unidirectional valve (9) being adapted to be detached from the protecting membrane (3) being housed in a portion with low deformability belonging to the protecting membrane (3), **characterised in that**:
- a seat of the valve (9) is a projection or protuberance (11), equipped with a shaped hole (13) inside which an undercut blocks a pin or abutment integral with the unidirectional valve (9) ;
- the plane base surface (4) is equipped with portions of compensating area (12) having a thin thickness with respect to the remaining bassorilievo surface composing the membrane (3), said hollow areas (12) connecting the scarcely deformable projection (11) with the bassorilievo portion composing the plane (4) of the membrane (3); and
- the portions of compensating area (12) are equipped with a rib (14) which creates a corrugated surface (12-14) whose stress direction is defined by a line joining two facing wings (7).

2. Protecting membrane (3) according to claim 1, **characterised in that** said membrane (3) has an elastic deforming capability according to a defined effort direction.

3. Protecting membrane (3) according to claim 1, **characterised in that** the unidirectional valve (9) is made with suitable material, not necessarily of the same type used for making the elastic membrane (3).

4. Protecting membrane (3) according to claim 1, **characterised in that** it creates corrugated surfaces (12-14) which are as many as the pairs of facing wings (7) being present along the edge of the membrane-type cover (3).

5. Protecting membrane (3) according to any one of the previous claims, **characterised in that** it is made of thermoplastic material.

6. Protecting membrane (3) according to any one of claims 1 to 4, **characterised in that** it is made of silicone or platinum silicone or peroxide silicone.

7. Protecting membrane (3) according to any one of claims 1 to 4, **characterised in that** it is made of elastomeric material.

8. Protecting membrane (3) according to any one of the previous claims, **characterised in that** it is made of elastic material adapted for cooking at 300°C and for freezing at -50°C.

9. Protecting membrane (3) according to any one of the previous claims, **characterised in that** said housed unidirectional valve (9) is of a type known in the motor vehicle field.

10. Protecting membrane (3) according to any one of the previous claims 1 to 8, **characterised in that** said housed unidirectional valve (9) is of a type known in the sanitary field.

11. Protecting membrane (3) according to any one of the previous claims 9 or 10, **characterised in that** the unidirectional valve (9) is adapted to be assembled through one of the following valve insertion techniques:
- molding in a step following the molding of the cover (3);
- over-molding with respect to the cover (3);
- molding in a monolithic piece with the cover (3).

## Patentansprüche

1. Schutzmembran (3) für einen zum Backen, Einfrieren und Aufbewahren von Nahrungsmitteln geeigneten Behälter, der genannte Behälter eignet sich zum Backen, oder er ist mit Deckeln ausgestattet, die nicht aus Metall sind, die Schutzmembran ist mit elastischen Teilen versehen, welche mit Griffen versehen sind, um die elastische Membran (3) auszudehnen und den Dimensionen der Behälteröffnung anzupassen, sie ist mit einem Sperrventil (9) zur Verbindung mit dem Außenbereich ausgestattet, das genannte Sperrventil (9) kann von der Schutzmembran (3) abgenommen werden, es ist in einem Bereich mit niedrigem Formänderungsvermögen untergebracht, der der Schutzmembran (3) angehört, und ist **dadurch gekennzeichnet, dass**:
- eine Ventilaufnahme (9) ein Butzen oder Vorsprung (11) ist, der mit einer Formbohrung (13) ausgestattet ist, in der ein Unterschnitt einen Bolzen oder einen Anschlag blockiert, der ein Stück mit dem Sperrventil (9) bildet;
- die Oberfläche mit ebener Basis (4) mit Teilen von Ausgleichsbereichen (12) ausgestattet ist, die eine dünne Stärke gegenüber der restlichen Oberfläche im Flachrelief haben, welche die Membran (3) bildet, die genannten ausgehöhlten Bereiche (12) verbinden den Butzen (11) mit niedrigem Formänderungsvermögen mit dem Teil im Flachrelief, der die Fläche (4) der Membran (3) bildet; und
- die Teile der Ausgleichsbereiche (12) mit einen Steg (14) ausgestattet sind, der eine faltige Oberfläche (12-14) bildet, welche eine Belastungsrichtung hat, die durch eine Verbindungslinie mit zwei gegenüberliegenden Rippen (7) definiert wird.

2. Schutzmembran (3) gemäß Patentanspruch 1, die **dadurch gekennzeichnet ist, dass** die genannte Membran (3) über ein elastisches Formänderungsvermögen aufgrund einer definierten Belastungsrichtung verfügt.

3. Schutzmembran (3) gemäß Patentanspruch 1, die **dadurch gekennzeichnet ist, dass** das Sperrventil (9) aus ad hoc Material hergestellt ist, das nicht unbedingt der gleiche Typ sein muss, der für die Herstellung der elastischen Membran (3) verwendet wird.

4. Schutzmembran (3) gemäß Patentanspruch 1, die **dadurch gekennzeichnet ist, dass** sie so viele faltige Oberflächen (12-14) bildet, wie gegenüber liegende Rippenpaare (7) längs des membranartigen Abdeckungsrandes (3) vorhanden sind.

5. Schutzmembran (3) gemäß einem der vorhergehenden Patentansprüche, die **dadurch gekennzeichnet ist, dass** sie aus thermoplastischem Material hergestellt ist.

6. Schutzmembran (3) gemäß einem der vorhergehenden Patentansprüche von 1 bis 4, die **dadurch gekennzeichnet ist, dass** sie aus Silikon oder Platinsilikon oder Peroxydsilikon hergestellt ist.

7. Schutzmembran (3) gemäß einem der vorhergehenden Patentansprüche von 1 bis 4, die **dadurch gekennzeichnet ist, dass** sie aus Elastomermaterial hergestellt ist.

8. Schutzmembran (3) gemäß einem der vorhergehenden Patentansprüche, die **dadurch gekennzeichnet ist, dass** sie aus elastischem Material hergestellt ist, das zum Backen bis 300°C und zum Tiefkühlen bis -50°C geeignet ist.

9. Schutzmembran (3) gemäß einem der vorhergehenden Patentansprüche, die **dadurch gekennzeichnet ist, dass** das genannte aufgenommene Sperrventil (9) der im Motorenbereich bekannte Typ ist.

10. Schutzmembran (3) gemäß einem der vorhergehenden Patentansprüche von 1 bis 8, die **dadurch gekennzeichnet ist, dass** das genannte aufgenommene Sperrventil (9) der im Gesundheitsbereich bekannte Typ ist.

11. Schutzmembran (3) gemäß einem der vorhergehenden Patentansprüche von 9 bis 10, die **dadurch gekennzeichnet ist, dass** das Sperrventil (9) dazu dient, durch eine der folgenden Einsetztechniken für Ventile zusammengesetzt zu werden:
- Pressen nach der Pressphase der Abdeckung (3);
- Aufpressen auf die Abdeckung (3);
- Pressen zu einem monolithischen Teil mit der Abdeckung (3).

## Revendications

1. Membrane de protection (3) pour conteneur idoine à la cuisson, congélation ou conservation d'aliments, ce conteneur étant adapté à la cuisson ou étant muni de couvercles non métalliques munies de parties élastiques, munie de prises pour dilater la membrane élastique (3) en l'adaptant aux dimensions de l'embout du conteneur, dotée d'une valve unidirectionnelle (9) de raccordement avec l'extérieur, ladite valve unidirectionnelle (9) étant détachable de la membrane de protection (3) étant logée dans une portion à basse déformabilité appartenant à la membrane de protection (3), **caractérisée par le fait que** :
- un logement de la valve (9) est une saillie ou protubérance (11), dotée d'un trou façonné (13) à l'intérieur duquel un creux bloc un pivot ou une battue solidaire avec la valve unidirectionnelle (9);
- la surface de base plate (4) est dotée de portions de zone de compensation (12) ayant une épaisseur fine par rapport à la surface restante en bas-relief constituant la membrane (3), dites zones creuses (12) en raccordant la saillie (11) peu déformable avec la portion en bas-relief constituant le plan (4) de la membrane (3); et
- les portions de zone de compensation (12) sont dotées d'une nervure (14) qui crée une surface plissée (12-14) ayant direction de sollicitation définie par une ligne de conjonction de deux ailettes opposées (7).

2. Membrane de protection (3) selon la revendication 1, **caractérisée par le fait que** cette membrane (3) possède une capacité déformante élastique selon une direction d'effort définie.

3. Membrane de protection (3) selon la revendication 1, **caractérisée par le fait que** la valve unidirectionnelle (9) est réalisée avec du matériel spécial, pas nécessairement du même type pour réaliser la membrane élastique (3).

4. Membrane de protection (3) selon la revendication 1, **caractérisée par** le fait de créer des surfaces plissées (12-14) autant qu'il y a de couples d'ailettes opposées (7) présentes le long du bord de la couverture (3) de type membrane.

5. Membrane de protection (3) selon une quelconque des revendications précédentes, **caractérisée par** le fait d'être réalisée en matière thermoplastique.

6. Membrane de protection (3) selon une quelconque des revendications de 1 à 4, **caractérisée par** le fait d'être réalisée en silicone ou silicone platinique ou silicone péroxydique.

7. Membrane de protection (3) selon une quelconque des revendications de 1 à 4, **caractérisée par** le fait d'être réalisée en matériel d'élastomère.

8. Membrane de protection (3) selon une quelconque des revendications précédentes, **caractérisée par** le fait d'être réalisée en matériel élastique adapté pour la cuisson à 300°C et la surgélation à -50°C.

9. Membrane de protection (3) selon une quelconque des revendications précédentes, **caractérisée par** le fait quel adite valve unidirectionnelle (9) logée est du type connu dans le domaine des engins à moteur.

10. Membrane de protection (3) selon une quelconque des revendications de 1 à 8, **caractérisée par le fait que** ladite valve unidirectionnelle (9) logée est du type connu dans le domaine sanitaire.

11. Membrane de protection (3) selon une quelconque des revendications 9 ou 10 précédentes, **caractérisée par le fait que** ladite valve unidirectionnelle (9) est apte à être assemblée au moyen d'une des techniques suivantes d'insertion des valves :
- estampage dans une phase successive à l'estampage de la couverture (3);
- sur-estampage par rapport à la couverture (3);
- estampage dans une pièce monolithique avec la couverture (3).
